# EUROPEAN PATENT APPLICATION

(11) **EP 4 578 800 A1**
(43) Date of publication of application: **02.07.2025**
(21) Application number: 24166953.0
(22) Date of filing: 27.03.2024
(51) Int. Cl.: B65G 1/04, B65G 1/137

(54) **INBOUND AND OUTBOUND CONTROL METHOD AND APPARATUS, AND INBOUND AND OUTBOUND SYSTEM**

(30) Priority: 28.12.2023 CN 202311839638
(71) Applicant: Beijing Jingdong Qianshi Technology Co., Ltd., Beijing 100176 (CN)
(72) Inventor: YU, Taoxuan, BEIJING, 100176 (CN)
(74) Representative: Page White Farrer

(57) **Abstract**

The present disclosure discloses an inbound and outbound control method and apparatus, and an inbound and outbound system, which relates to the technical field of warehousing. The inbound control method comprises: determining a first target temporary storage location under a target rack based on a first target storage location of first goods on the target rack; determining an inbound path for a conveyor based on the first target temporary storage location and a current location of the conveyor; controlling the conveyor to convey the first goods to the first target temporary storage location along the inbound path; and controlling a storage and retrieval device to transport the first goods from the first target temporary storage location to the first target storage location.

## Description

### TECHNICAL FIELD

This disclosure relates to the field of warehousing technology, particularly to an inbound and outbound control method and apparatus, and an inbound and outbound system.

### BACKGROUND

In automated warehouses, goods are typically conveyed by a conveyor to a temporary storage location under a target rack, and then moved from the temporary storage location to the storage location on the target rack by a storage and retrieval device equipped for the rack. In addition, the goods can also be moved by the storage and retrieval device from the storage location on the target rack to the temporary storage location under the target rack, and then conveyed by the conveyor out of the warehouse.

### SUMMARY

According to a first aspect of the embodiments of the present disclosure, there is provided an inbound control method, comprising: determining a first target temporary storage location under a target rack based on a first target storage location of first goods on the target rack; determining an inbound path for a conveyor based on the first target temporary storage location and a current location of the conveyor; controlling the conveyor to convey the first goods to the first target temporary storage location along the inbound path; controlling a storage and retrieval device to transport the first goods from the first target temporary storage location to the first target storage location.

In some embodiments, the determining the inbound path for the conveyor comprises: determining the inbound path based on at least one of a low profile passage under an each rack of a plurality of racks in a rack area, a high profile passage under the each rack of the plurality of the racks in the rack area, or alleys in the rack area, wherein the low profile passage allows the conveyor to pass through with the first goods lifted to a low level, and the high profile passage allows the conveyor to pass through with the first goods lifted to a high level.

In some embodiments, the first target temporary storage location is formed by a temporary storage bracket, and the low profile passage is a passage under the temporary storage bracket.

In some embodiments, the controlling the conveyor to convey the first goods to the first target temporary storage location along the inbound path comprises: controlling the conveyor to move from a low profile passage under the target rack to a first target point located below the first target temporary storage location along the inbound path; controlling the conveyor to move from the first target point to a first temporary location in a high profile passage under the target rack; controlling the conveyor to lift the first goods to a predetermined height; and controlling the conveyor to return to the first target point to place the first goods on the first target temporary storage location.

In some embodiments, the controlling the conveyor to convey the first goods to the first target temporary storage location along the inbound path comprises: controlling the conveyor to move along the inbound path to a second temporary location in a low profile passage under a first rack adjacent to the target rack, wherein the low profile passage under the target rack is adjacent to a high profile passage under the first rack; controlling the conveyor to move from the second temporary location to a third temporary location in the high profile passage under the first rack; controlling the conveyor to lift the first goods to a predetermined height; and controlling the conveyor to traverse a first alley between the target rack and the first rack, and move from the third temporary location to a first target point located below the first target temporary storage location to place the first goods on the first target temporary storage location.

In some embodiments, the controlling the conveyor to convey the first goods to the first target temporary storage location along the inbound path comprises: controlling the conveyor to move along the inbound path to a fourth temporary location in a low profile passage under a second rack adjacent to the target rack, wherein a high profile passage under the target rack is adjacent to the low profile passage under the second rack; controlling the conveyor to traverse from the fourth temporary location a second alley between the target rack and the second rack, and move to a fifth temporary location in a high profile passage under the target rack; controlling the conveyor to lift the first goods to a predetermined height; and controlling the conveyor to move to the first target point located below the first target temporary storage location to place the first goods on the first target temporary storage location.

In some embodiments, the controlling the conveyor to lift the first goods to the predetermined height comprises: controlling the conveyor to lift the first goods to the predetermined height at the fifth temporary location, wherein the fifth temporary location is adjacent to the first target point.

In some embodiments, the controlling the conveyor to move to the first target point comprises: controlling the conveyor to move from the fifth temporary location to the first target point.

In some embodiments, the controlling the conveyor to lift the first goods to the predetermined height comprises: controlling the conveyor to move from the fifth temporary location to a sixth temporary location along the high profile passage under the target rack, and to lift the first goods to the predetermined height during the movement along the high profile passage under the target rack, wherein the fifth temporary location is not adjacent to the first target point, and the sixth temporary location is adjacent to the first target point.

In some embodiments, the controlling the conveyor to move to the first target point comprises: controlling the conveyor to move from the sixth temporary location to the first target point.

In some embodiments, the conveyor enters a low profile passage of a designated rack along the inbound path from one end of the designated rack in the rack area, and continues to move along the inbound path to a first target point located below the first target temporary storage location; or the conveyor enters the low profile passage of the designated rack from one side of the designated rack along the inbound path, and continues to move along the inbound path to the first target point.

According to a second aspect of the embodiments of the present disclosure, there is provided an outbound control method, comprising: determining a second target temporary storage location under a target rack based on a second target storage location of second goods on the target rack; controlling a storage and retrieval device to transport the second goods from the second target storage location to the second target temporary storage location; determining an outbound path for a conveyor based on the second target temporary storage location and an outbound target location; and controlling the conveyor to convey the second goods from the second target temporary storage location to the outbound target location along the outbound path.

In some embodiments, the determining the outbound path for the conveyor comprises: determining the outbound path based on at least one of a low profile passage under an each rack of a plurality of racks in a rack area, a high profile passage under the each rack of the plurality of the racks in the rack area, or alleys in the rack area, wherein the low profile passage allows the conveyor to pass through with the first goods lifted to a low level, and the high profile passage allows the conveyor to pass through with the first goods lifted to a high level.

In some embodiments, the second target temporary storage location is formed by a temporary storage bracket, and the low profile passage is a passage under the temporary storage bracket.

In some embodiments, the controlling the conveyor to convey the second goods from the second target temporary storage location to the outbound target location along the outbound path comprises: controlling the conveyor to obtain, at a second target point under the second target temporary storage location, the second goods located at the second target temporary storage location in a high lifting state; controlling the conveyor to move to a seventh temporary location in a high profile passage under the target rack; controlling the conveyor to switch from the high lifting state to a low lifting state at the seventh temporary location; controlling the conveyor to return to the second target point from the seventh temporary location; and controlling the conveyor to convey the second goods from the second target point to the outbound target location along the outbound path.

In some embodiments, the controlling the conveyor to convey the second goods from the second target temporary storage location to the outbound target location along the outbound path comprises: controlling the conveyor to obtain, at a second target point under the second target temporary storage location, the second goods located at the second target temporary storage location in a high lifting state; controlling the conveyor to traverse a third alley between the target rack and an adjacent third rack at the second target point and to move to an eighth temporary location in a high profile passage under the third rack, wherein the low profile passage under the target rack is adjacent to the high profile passage under the third rack; controlling the conveyor to switch from a high lifting state to a low lifting state at the eighth temporary location; controlling the conveyor to move from the eighth temporary location to a ninth temporary location in a low profile passage under the third rack; and controlling the conveyor to convey the second goods from the ninth temporary location to the outbound target location along the outbound path.

In some embodiments, the controlling the conveyor to convey the second goods from the second target temporary storage location to the outbound target location along the outbound path comprises: controlling the conveyor to obtain, at a second target point under the second target temporary storage location, the second goods located at the second target temporary storage location in a high lifting state; controlling the conveyor to move to a seventh temporary location in a high profile passage under the target rack; controlling the conveyor to switch from a high lifting state to a low lifting state; controlling the conveyor to traverse a fourth alley between the target rack and an adjacent fourth rack and move to a tenth temporary location in a low profile passage under the fourth rack, wherein the high profile passage under the target rack is adjacent to the low profile passage under the fourth rack; and controlling the conveyor to convey the second goods from the tenth temporary location to the outbound target location along the outbound path.

In some embodiments, the controlling the conveyor to switch from a high lifting state to a low lifting state comprises: controlling the conveyor to switch from a high lifting state to a low lifting state at the seventh temporary location.

In some embodiments, the controlling the conveyor to move to the tenth temporary location comprises: controlling the conveyor to traverse the fourth alley from the seventh temporary location and move to the tenth temporary location.

In some embodiments, the controlling the conveyor to switch from a high lifting state to a low lifting state comprises: controlling the conveyor to move from the seventh temporary location to the tenth temporary storage location along the high profile passage under the target rack, and controlling the conveyor to switch from a high lifting state to a low lifting state during the movement along the high profile passage under the target rack.

In some embodiments, the controlling the conveyor to move to the tenth temporary location comprises: controlling the conveyor to traverse the fourth alley from the tenth temporary location and move to the tenth temporary location.

In some embodiments, determining an unloaded path for the conveyor based on the second target temporary storage location and a current location of the conveyor; and controlling the conveyor to move along the unloaded path to a second target point located below the target temporary storage location.

In some embodiments, the determining the unloaded path for the conveyor comprises: determining the unloaded path based on at least one of a low profile passage under an each rack of a plurality of racks in a rack area, a high profile passage under the each rack of the plurality of the racks in the rack area, or alleys in the rack area.

In some embodiments, the determining the unloaded path for the conveyor comprises: determining the unloaded path based on alleys in the rack area.

According to a third aspect of the embodiments of the present disclosure, there is provided an inbound control apparatus, comprising: a first processing module configured to determine a first target temporary storage location under a target rack based on a first target storage location of first goods on the target rack; a second processing module configured to determine an inbound path for a conveyor based on the first target temporary storage location and a current location of the conveyor; a third processing module configured to control the conveyor to convey the first goods to the first target temporary storage location along the inbound path; and a fourth processing module configured to control a storage and retrieval device to transport the first goods from the first target temporary storage location to the first target storage location.

According to a fourth aspect of the embodiments of the present disclosure, there is provided an outbound control apparatus, comprising: a fifth processing module configured to determine a second target temporary storage location under a target rack based on a second target storage location of second goods on the target rack; a sixth processing module configured to control a storage and retrieval device to transport the second goods from the second target storage location to the second target temporary storage location; a seventh processing module configured to determine an outbound path for a conveyor based on the second target temporary storage location and an outbound target location; and an eighth processing module configured to control the conveyor to convey the second goods from the second target temporary storage location to the outbound target location along the outbound path.

According to a fifth aspect of the embodiments of the present disclosure, there is provided an inbound and outbound control apparatus, comprising: a processor; and a memory coupled to the processor, storing program instructions which, when executed by the processor, cause the processor to execute the method according to any one of the above embodiments.

According to a sixth aspect of the embodiments of the present disclosure, there is provided an inbound and outbound system, comprising: the inbound and outbound control apparatus according to any one of the above embodiments; a plurality of racks, wherein an each rack of the plurality of racks comprises at least one layer of storage spaces, with alleys formed by spaces between the plurality of racks; a conveyor configured to convey a first goods to a first target temporary storage location or convey a second goods out of a warehouse from a second target temporary storage location based on the control of the inbound and outbound control apparatus; and a storage and retrieval device provided on the rack configured to transport the first goods from the first target temporary storage location to a first target storage location, or transport the second goods from the second target storage location to the second target temporary storage location.

In some embodiments, a high profile passage and a low profile passage are provided under the rack, the high profile passage having a first height that is greater than a height of the conveyor in a high lifting state, and the low profile passage having a second height that is greater than a height of the conveyor in a low lifting state and less than the height of the conveyor in the high lifting state.

In some embodiments, the storage and retrieval device is located above the alley, and a space under the storage and retrieval device has a third height, wherein the third height is greater than a height of the conveyor in an unloaded state and less than the height of the conveyor in the low lifting state.

According to a seventh aspect of embodiments of the present disclosure, there is provided a computer-readable storage medium stored thereon computer instructions that, when executed by a processor, implement the method according to any one of the above embodiments.

Other features and advantages of the present invention will become apparent from the following detailed description of exemplary embodiments of the present disclosure with reference to the accompanying drawings.

### BRIEF DESCRIPTION OF THE DRAWINGS

In order to more clearly explain the embodiments of the present invention or the technical solutions in the prior art, a brief introduction will be given below for the drawings required to be used in the description of the embodiments or the prior art. It is obvious that, the drawings illustrated as follows are merely some embodiments of the present disclosure. For a person skilled in the art, he or she may also acquire other drawings according to such drawings on the premise that no inventive effort is involved.
FIG. 1 is a schematic diagram of a warehouse operation scenario according to one embodiment of the present disclosure;
FIG. 2 is a schematic diagram of a rack according to one embodiment of the present disclosure;
FIG. 3 is a flowchart of an inbound control method according to one embodiment of the present disclosure;
FIG. 4 is a schematic diagram of an inbound path according to one embodiment of the present disclosure;
FIG. 5 is a schematic diagram of an inbound path according to another embodiment of the present disclosure;
FIG. 6 is a schematic diagram of an inbound path according to still another embodiment of the present disclosure;
FIGS. 7A to 7G are schematic diagrams of an inbound process of goods according to some embodiments of the present disclosure;
FIGS. 8A to 8D are schematic diagrams of an inbound process of goods according to other embodiments of the present disclosure;
FIGS. 9A to 9D are schematic diagrams of an inbound process of goods according to still other embodiments of the present disclosure;
FIGS. 10A to 10B are schematic diagrams of an inbound process of goods according to still other embodiments of the present disclosure;
FIG. 11 is a flowchart of an outbound control method according to one embodiment of the present disclosure;
FIG. 12 is a schematic diagram of inbound and outbound paths according to one embodiment of the present disclosure;
FIG. 13 is a schematic diagram of inbound and outbound paths according to another embodiment of the present disclosure;
FIGS. 14A to 14E are schematic diagrams of an outbound process of goods according to some embodiments of the present disclosure;
FIGS. 15A to 15E are schematic diagrams of an outbound process of goods according to other embodiments of the present disclosure;
FIGS. 16A to 16D are schematic diagrams of an outbound process of goods according to still other embodiments of the present disclosure;
FIGS. 17A to 17B are schematic diagrams of an outbound process of goods according to still other embodiments of the present disclosure;
FIG. 18 is a structural diagram of an inbound control apparatus according to one embodiment of the present disclosure;
FIG. 19 is a structural diagram of an outbound control apparatus according to one embodiment of the present disclosure;
FIG. 20 is a structural diagram of an inbound and outbound control apparatus according to one embodiment of the present disclosure;
FIG. 21 is a structural diagram of an inbound and outbound control system according to one embodiment of the present disclosure.

### DETAILED DESCRIPTION

Below, a clear and complete description will be given for the technical solution of embodiments of the present disclosure with reference to the figures of the embodiments. Obviously, merely some embodiments of the present disclosure, rather than all embodiments thereof, are given herein. The following description of at least one exemplary embodiment is in fact merely illustrative and is in no way intended as a limitation to the invention, its application or use. All other embodiments obtained by persons of ordinary skill in the art based on the embodiments of the present disclosure without creative efforts shall fall within the protection scope of the present disclosure.

Unless otherwise specified, the relative arrangement, numerical expressions and values of the components and steps set forth in these examples do not limit the scope of the invention.

At the same time, it should be understood that, for ease of description, the dimensions of the various parts shown in the drawings are not drawn to actual proportions.

Techniques, methods, and apparatus known to those of ordinary skill in the relevant art may not be discussed in detail, but where appropriate, these techniques, methods, and apparatuses should be considered as part of the specification.

Of all the examples shown and discussed herein, any specific value should be construed as merely illustrative and not as a limitation. Thus, other examples of exemplary embodiments may have different values.

Notice that, similar reference numerals and letters are denoted by the like in the accompanying drawings, and therefore, once an item is defined in a drawing, there is no need for further discussion in the accompanying drawings.

The inventor noticed that in today's warehousing industry, complex paths planed for conveyors to perform frequent inbound and outbound tasks tend to cause congestion and affect inbound and outbound efficiency.

In view of this, the present disclosure provides an inbound and outbound control scheme that can effectively improve the inbound and outbound efficiency of conveyors.

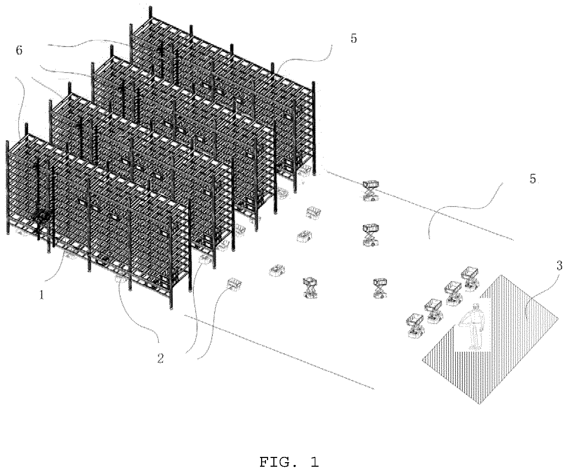

As shown in FIG. 1, a warehouse includes a plurality of racks 5 each having a plurality of layers of storage spaces, and each storage space can store one type of goods. The term "inbound operation" used herein refers to moving goods from an external workstation to a target inbound location, and the term "outbound operation" refers to moving goods from a target outbound location to an external workstation.

In the inbound operation of goods 1, a conveyor (such as a transfer carriage) 2 is used to convey the inbound goods from a workstation 3 to a temporary storage location under a rack 5 through a transition zone 4, then a storage and retrieval device (such as a goods storage mechanism on the rack) 6 is used to store the goods 1 from the temporary storage location to a target inbound storage location. In the outbound operation of goods, the storage and retrieval device 6 is used to transport outbound goods 1 from a target outbound location to a temporary storage location, and then the conveyor 2 is used to convey the outbound goods 1 from the temporary storage location to the workstation 3 through the transition zone 4.

For example, each rack 5 can be equipped with one or more storage and retrieval devices 6.

For example, the conveyor 2 is an automatic guided vehicle with automatic navigation function, which can travel between the temporary storage location and the workstation, and has a loading mechanism that can pick up goods at the temporary storage location.

It should be noted that workstation 3 is the working location for picking goods, generally including distribution racks or distribution slots. Operators or mechanical arms can wait at the workstation for the conveyor to convey the goods and select from the goods to complete picking.

FIG. 1 illustratively shows one workstation located on one side of the racks. It can be understood that a plurality of workstations can be set as required, and the position of workstations relative to the racks can also be specified as needed.

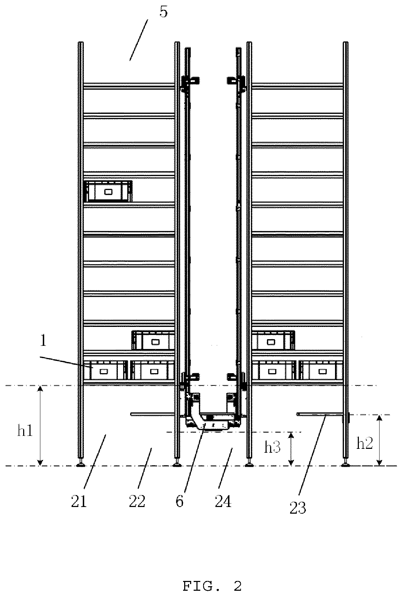

As shown in FIG. 2, the rack 5 includes a plurality of layers, each layer comprising a plurality of storage locations apart from each other. Under the rack, there are a high profile passage 21 and a low profile passage 22, with a temporary storage bracket 23 above the low profile passage 22. The storage and retrieval device 6 is located above an alley 24.

It should be noted that the high profile passage 21 has a first height hl, and the low profile passage 22 has a second height h2. The storage and retrieval device 6 moves above the alley 24, and when the storage and retrieval device 6 is in its lowest position, the space below the storage and retrieval device 6 has a third height h3.

The first height h1 is greater than a height of the conveyor with the goods lifted to a high level. The second height h2 is greater than a height of the conveyor with the goods lifted to a low level and less than the height of the conveyor with the goods lifted to a high level. The third height h3 is greater than a height of the conveyor when unloaded and less than the height of the conveyor with the goods lifted to a low level. In this case, the high profile passage 21 allows a conveyor to pass through with goods lifted to a high level, the low profile passage 22 allows a conveyor to pass through with goods lifted to a low level, and the alley 24 allows an unloaded conveyor to pass through.

In addition, an unloaded conveyor can traverse the alley 24 and move from the bottom of one rack to the bottom of an adjacent rack. Without interference from the storage and retrieval device 6, a conveyor with the goods lifted to a low level can also traverse the alley 24 and move from the bottom of one rack to the bottom of an adjacent rack.

It is therefore possible to reasonably plan the conveyor's travel path, by considering the alleys between the racks, the high profile passages under the racks and the low profile passages under the racks, to reduce the conveyor's travel time and effectively improve the efficiency of the inbound and outbound operations.

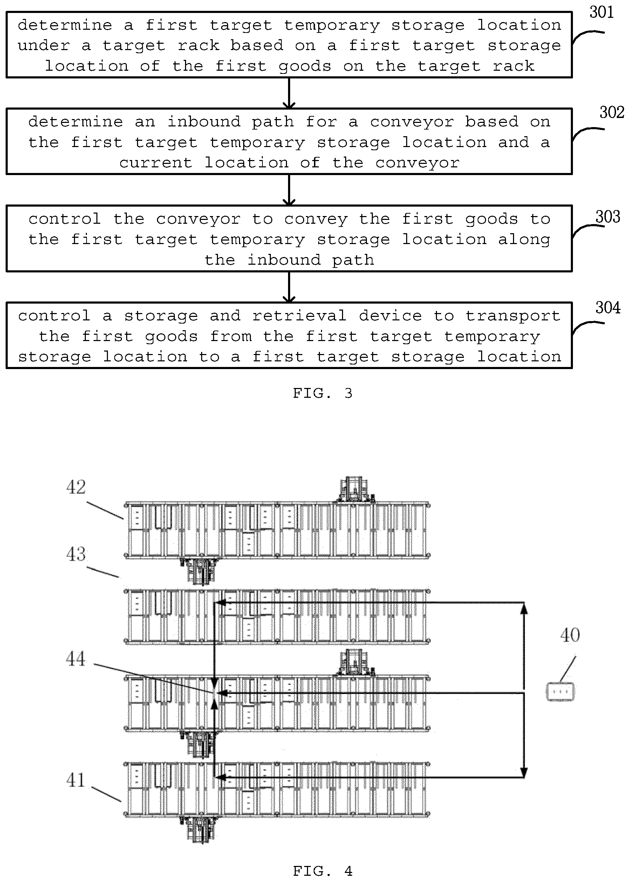

FIG. 3 is a flowchart of an inbound control method according to one embodiment of the present disclosure. In some embodiments, the following inbound control method is performed by an inbound control apparatus.

In step 301, a first target temporary storage location under a target rack is determined based on a first target storage location of first goods on a target rack.

In some embodiments, the first target temporary storage location is formed by a temporary storage bracket, and the low profile passage is a passage under the temporary storage bracket.

In step 302, an inbound path is determined for a conveyor based on the first target temporary storage location and a current location of the conveyor.

In some embodiments, the inbound path is determined based on at least one of a low profile passage under an each rack of a plurality of racks in a rack area, and a high profile passage under the each rack of the plurality of the racks in the rack area, or alleys in the rack area. The low profile passage allows a conveyor to pass through with the first goods lifted to a low level, and the high profile passage allows a conveyor to pass through with the first goods lifted to a high level.

In step 303, the conveyor is controlled to convey the first goods to the first target temporary storage location along the inbound path.

In some embodiments, the conveyor enters a low profile passage of a designated rack along the inbound path from one end of the designated rack in the rack area, and continues to move along the inbound path to a first target point located below the first target temporary storage location.

For example, as shown in FIG. 4, a conveyor 40 carrying the goods enters a low profile passage 42 of a designated rack from one end of the designated rack in the rack area, and continues to move along the inbound path to a first target point 44. During this procedure, the conveyor 40 can move as required in the high profile passage 41 and the low profile passages 42 under the each rack, and in the alley 43.

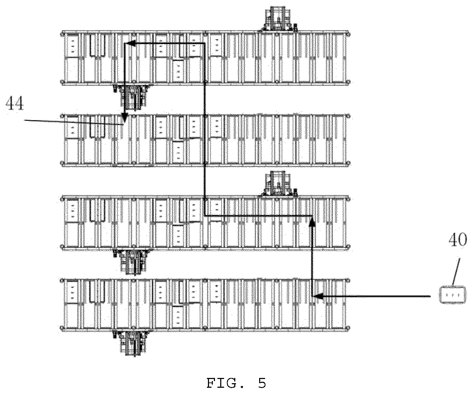

For example, as shown in FIG. 5, the conveyor 40 enters a low profile passage under a rack from one end of the rack, passes through a plurality of racks and alleys, and finally reaches the first target point 44.

In other embodiments, along the inbound path, the conveyor enters a low profile passage of a designated rack from one side of the designated rack, and continues to move along the inbound path to the first target point.

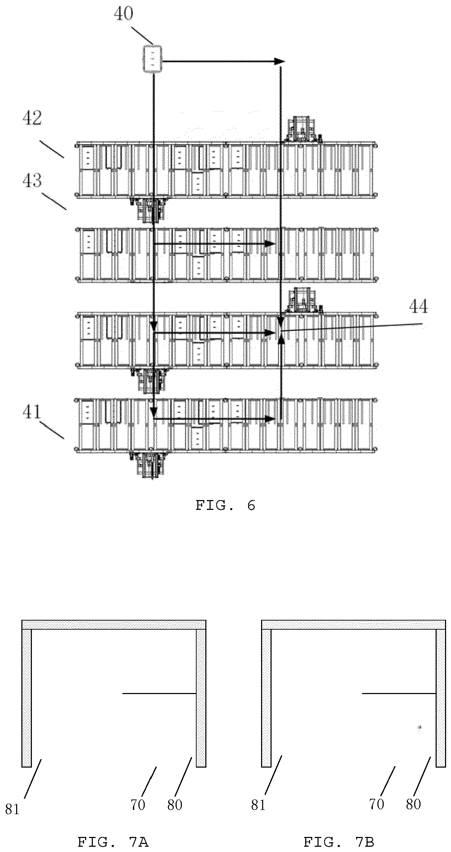

For example, as shown in FIG. 6, a conveyor 40 carrying the goods enters a low profile passage 42 of a designated rack from one side of the designated rack, and continues to move along the inbound path to the first target point 44. During this procedure, the conveyor 40 can move as required in the high profile passage 41 under the each rack, the low profile passages 42 under the each rack, and in the alley 43.

It should be noted that the conveyor may convey the first goods to the first target point in different ways. Specific explanations are given below with reference to Embodiments 1 to 3.

### Embodiment 1:

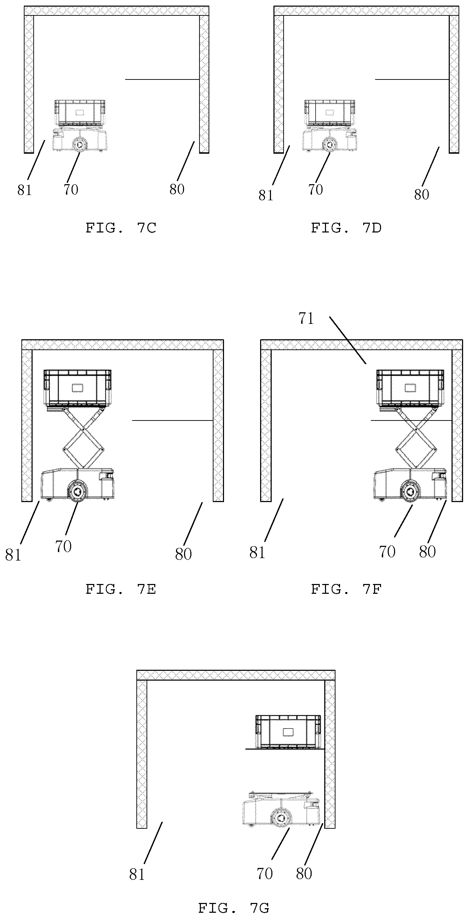

1) A conveyor is controlled to move from a low profile passage under a target rack to a first target point 80 along an inbound path, as shown in FIG. 7A.
2) The conveyor 70 is controlled to move from the first target point 80 to a first temporary location 81 in a high profile passage under the target rack.
   As shown in FIG. 7B, the conveyor 70 adjusts its posture. Next, as shown in FIG. 7C, the conveyor 70 moves to the first temporary location 81 in the high profile passage.
3) The conveyor is controlled to lift the first goods to a predetermined height.
   As shown in FIG. 7D, the conveyor 70 adjusts its posture. Next, as shown in FIG. 7E, the conveyor 70 lifts the first goods to the predetermined height.
4) The conveyor 70 is controlled to return to the first target point 80 to place the first goods on the first target temporary storage location 71, as shown in FIG. 7F.

Next, as shown in FIG. 7G, the conveyor 70 retracts the extension mechanism and enters an unloaded state.

### Embodiment 2:

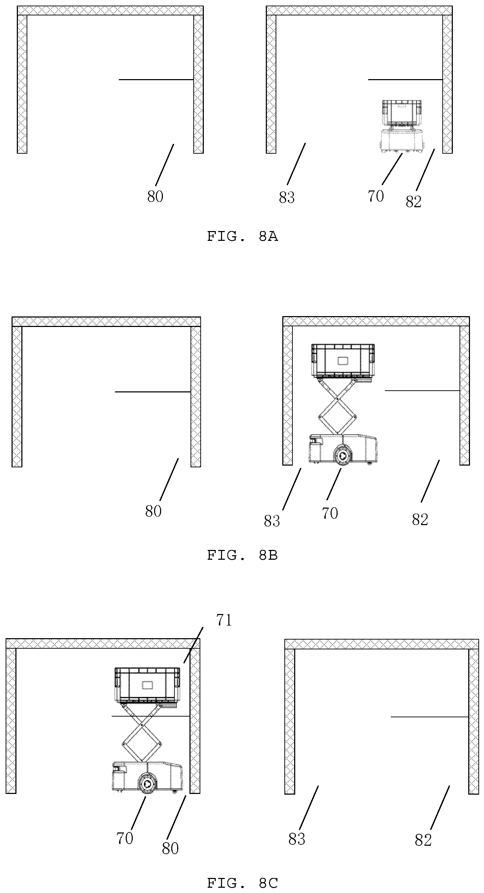

1) The conveyor 70 is controlled to move along the inbound path to a second temporary location 82 in a low profile passage under a first rack adjacent to the target rack, wherein the low profile passage under the target rack is adjacent to a high profile passage under the first rack, as shown in FIG. 8A.
2) The conveyor 70 is controlled to move from the second temporary location 82 to a third temporary location 83 in the high profile passage under the first rack, and is controlled to lift the first goods to the predetermined height, as shown in FIG. 8B.
3) The conveyor 70 is controlled to traverse a first alley between the target rack and the first rack, and move from the third temporary location 83 to the first target point 80 to place the first goods on the first target temporary storage location 71, as shown in FIG. 8C.

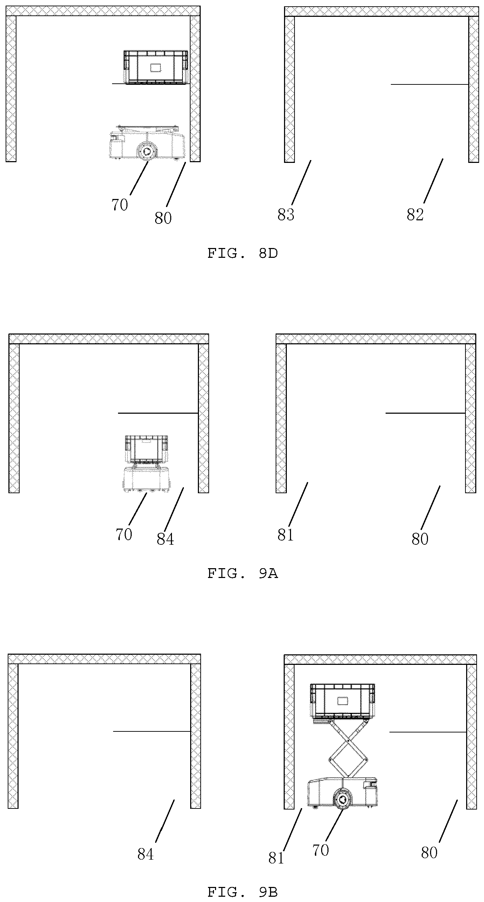

Next, as shown in FIG. 8D, the conveyor 70 retracts the extension mechanism and enters an unloaded state.

### Embodiment 3:

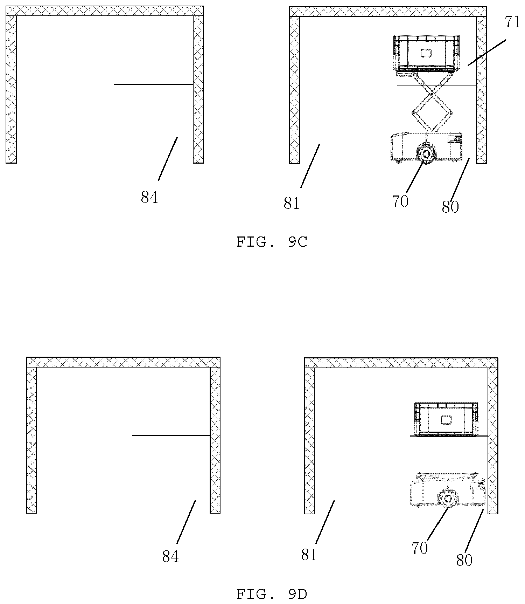

1) The conveyor 70 is controlled to move along the inbound path to a fourth temporary location 84 in a low profile passage under a second rack adjacent to the target rack, wherein a high profile passage under the target rack is adjacent to the low profile passage under the second rack, as shown in FIG. 9A.
2) The conveyor 70 is controlled to traverse a second alley between the target rack and the second rack, and move from the fourth temporary location to a first temporary location 81 in the high profile passage under the target rack, and to lift the first goods to the predetermined height, as shown in FIG. 9B.
3) The conveyor 70 is controlled to move to the first target point 80 to place the first goods on the first target temporary storage location 71, as shown in FIG. 9C.

Next, as shown in FIG. 9D, the conveyor 70 retracts the extension mechanism and enters an unloaded state.

It should be noted that in FIG. 9B, the conveyor 70 may lift the first goods to the predetermined height at its current location or lift the first goods to a predetermined height during movement.

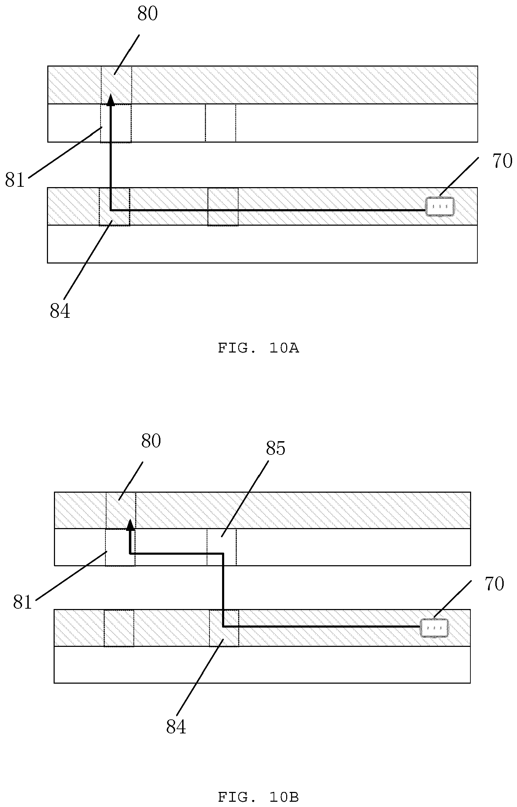

For example, as shown in FIG. 10A, the conveyor 70 is controlled to traverse the alley from the temporary location 84 and to reach the temporary location 81 in the high profile passage under the target rack. The conveyor 70 is controlled to lift the first goods to the predetermined height at the temporary location 81, and then to reach the first target point 80.

For example, as shown in FIG. 10B, the conveyor 70 is controlled to traverse the alley from the temporary location 84 and to reach the temporary location 85 in the high profile passage under the target rack. The first goods are lifted to the predetermined height during the movement of the conveyor 70 from the temporary location 85 to the temporary location 81. Upon reaching the temporary location 81, the conveyor may directly proceed to the first target point 80. Obviously, in this manner, the time for the conveyor 70 to lift the first goods to the predetermined height under a static condition can be effectively saved, thereby improving the operational efficiency of the conveyor.

Returning to FIG. 3, in step 304, a storage and retrieval device is controlled to transport the first goods from the first target temporary storage location to a first target storage location.

In the inbound control method provided in the above embodiment of the present disclosure, the travel path of the conveyor can be reasonably planned by considering the alleys between the racks, the high profile passages under the racks and the low profile passages under the racks, to reduce the travel time of the conveyor and effectively improve the efficiency of the inbound and outbound operations.

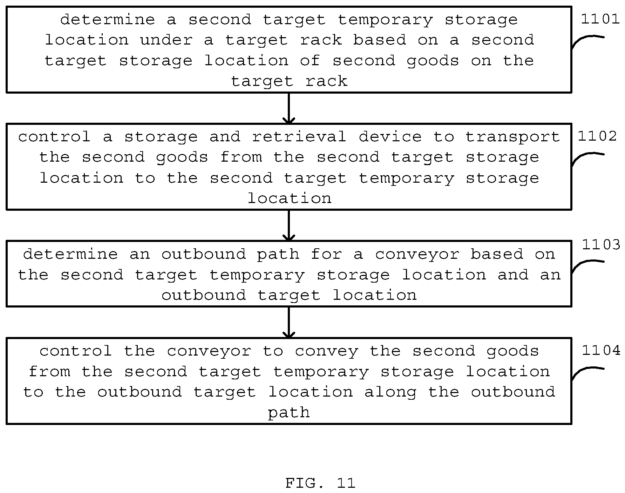

FIG. 11 is a flowchart of an outbound control method according to an embodiment of the present disclosure. In some embodiments, the following outbound control method is performed by an outbound control apparatus.

In step 1101, a second target temporary storage location under a target rack is determined based on a second target storage location of second goods on the target rack;

In some embodiments, the second target temporary storage location is formed by a temporary storage bracket, and the low profile passage is a passage under the temporary storage bracket.

In step 1102, a storage and retrieval device is controlled to transport the second goods from the second target storage location to the second target temporary storage location.

In step 1103, an outbound path is determined for a conveyor based on the second target temporary storage location and an outbound target location.

In some embodiments, the outbound path is determined based on at least one of a low profile passage under an each rack of a plurality of racks in a rack area, a high profile passage under the each rack of the plurality of the racks in the rack area, or alleys in the rack area, wherein the low profile passage allows the conveyor to pass through with the first goods lifted to a low level, and the high profile passage allows the conveyor to pass through with the first goods lifted to a high level.

In step 1104, the conveyor is controlled to convey the second goods from the second target temporary storage location to the outbound target location along the outbound path.

It should be noted that an unloaded conveyor may be located inside or outside the rack area. In this case, an unloaded path is determined for the conveyor based on the second target temporary storage location and a current location of the conveyor. Next, the conveyor is controlled to move along the unloaded path to a second target point located below the target temporary storage location.

In some embodiments, the unloaded path is determined based on at least one of a low profile passage under the each rack of the plurality of racks in the rack area, a high profile passage under the each rack of the plurality of racks in the rack area, or alleys in the rack area.

For example, the unloaded path is determined based on alleys in the rack area.

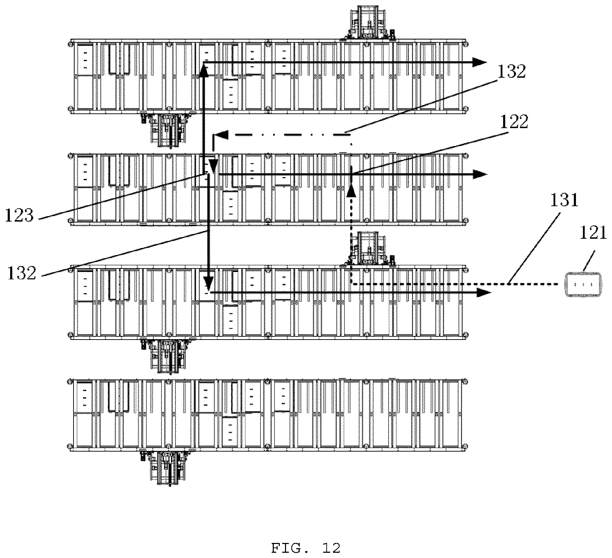

It should be noted that the inbound operation and the outbound operation are often carried out continuously. As shown in FIG. 12, a conveyor 121 conveys the first goods to a first temporary storage location 122 along an inbound path 131. Next, a conveyor 121 in an unloaded state reaches a second temporary storage location 123 along an unloaded path 132 to obtain the second goods. Then, a conveyor 121 conveys the second goods along an outbound path 133 to an outbound target location.

As shown in FIG. 12, the unloaded conveyor 121 can choose different paths to reach the second temporary storage location 123 from the first temporary storage location 122. For example, the conveyor 121 can travel straight along the low profile passage where the first temporary storage location 122 is located to reach the second temporary storage location 123. However, since the conveyor 121 is in the unloaded state, its height is low and it can move along the alley. Therefore, in this case, by planning a path that contains the alley, on the one hand, it can be ensured that the conveyor 121 can reach the destination smoothly, and on the other hand, it will not occupy the low profile passage or the high profile passage, so as not to interfere with other conveyors carrying goods.

In addition, as shown in FIG. 12, the inbound path 131 of the conveyor 121 may or may not overlap the outbound path 133 of the conveyor 121. It should be noted that in a case where the inbound path 131 and outbound path 133 do not overlap, it can be ensured that the inbound path 131 of the conveyor 121, the unloaded path 132 of the conveyor 121, and the outbound path 133 of the conveyor 121 form a loop. In this way, it can effectively avoid congestion between different conveyors due to traffic on the same path.

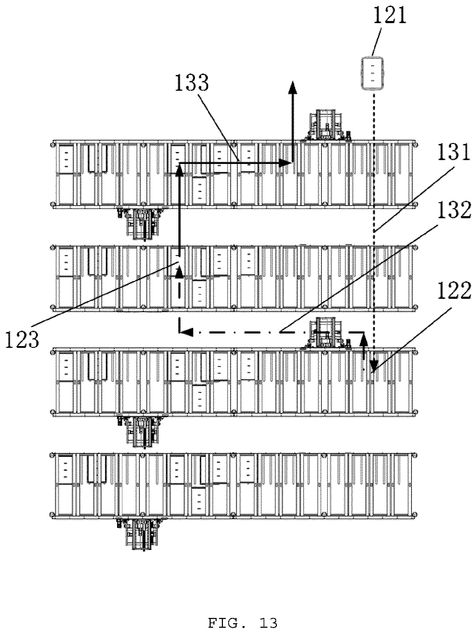

In the embodiment shown in FIG. 12, the conveyor 121 enters the rack area from one end of the rack and leaves the rack area from another end of the rack. In the embodiment shown in FIG. 13, the conveyor 121 enters the rack area from one side of the rack and leaves the rack area from another side of the rack.

For simplicity, only one outbound path 133 is shown in FIG. 13. The outbound path 133, the unloaded path 132, and the inbound path 131 form a loop.

It should be noted that a conveyor may convey the second goods from the second target temporary storage location to the outbound target location in different ways. Specific explanations are given below with reference to Embodiments 4 to 6.

### Embodiment 4:

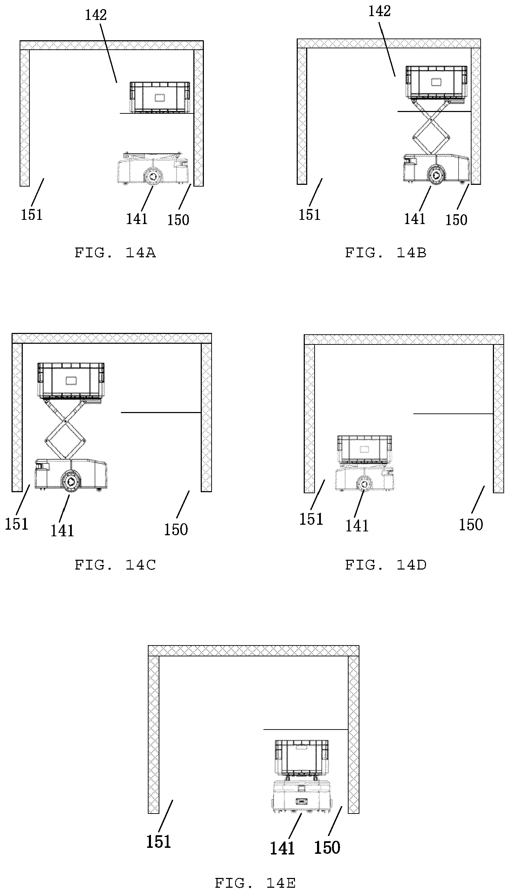

1) A conveyor 141 is controlled to move to a second target point 150 in a low profile passage under a target rack, as shown in FIG. 14A.
2) The conveyor 141 is controlled to obtain the second goods located at a second target temporary storage location 142 in a high lifting state, as shown in FIG. 14B.
3) The conveyor 141 is controlled to move to a seventh temporary location 151 in a high profile passage under the target rack, as shown in FIG. 14C.
4) The conveyor 141 is controlled to switch from a high lifting state to a low lifting state at the seventh temporary location 151, as shown in FIG. 14D.
5) The conveyor 141 is controlled to return to the second target point 150 from the seventh temporary location 151, as shown in FIG. 14E.

Next, the conveyor 141 is controlled to convey the second goods from the second target point 150 to an outbound target location along an outbound path.

### Embodiment 5:

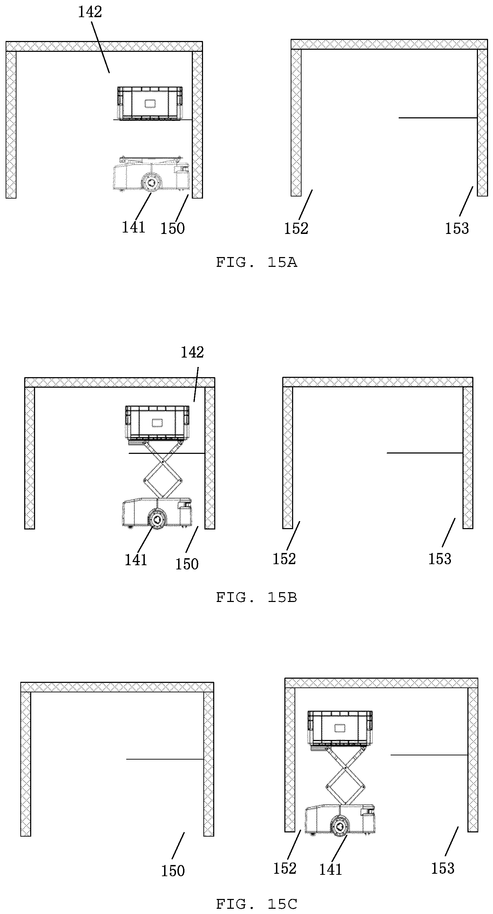

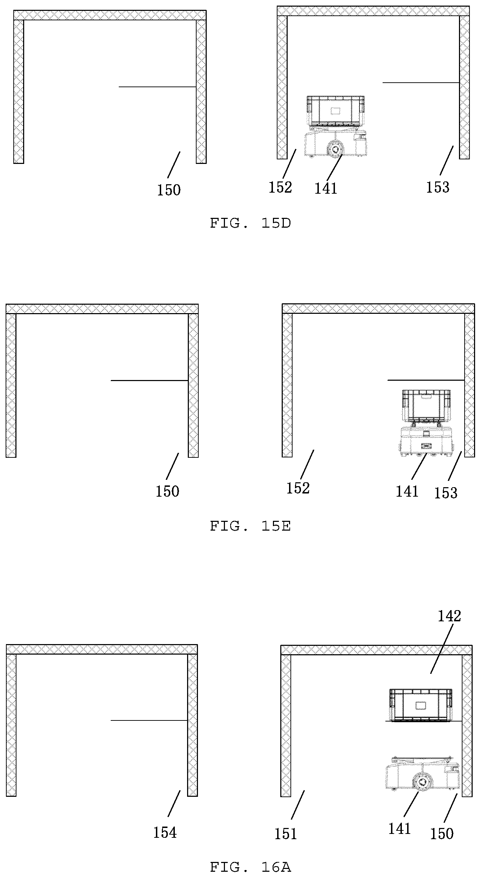

1) A conveyor 141 is controlled to move to a second target point 150 in a low profile passage under a target rack, as shown in FIG. 15A.
2) The conveyor 141 is controlled to obtain the second goods located at a second target temporary storage location 142 in a high lifting state, as shown in FIG. 15B.
3) The conveyor 141 is controlled to traverse a third alley between the target rack and an adjacent third rack at the second target point and to move to an eighth temporary location 152 in a high profile passage under the third rack, wherein the low profile passage under the target rack is adjacent to the high profile passage under the third rack, as shown in FIG. 15C.
4) The conveyor 141 is controlled to switch from a high lifting state to a low lifting state at the eighth temporary location 152, as shown in FIG. 15D.
5) The conveyor 141 is controlled to move from the eighth temporary location 152 to a ninth temporary location 153 in a low profile passage under the third rack, as shown in FIG. 15E.

Next, the conveyor 141 is controlled to convey the second goods from the ninth temporary location 153 to an outbound target location along an outbound path.

### Embodiment 6:

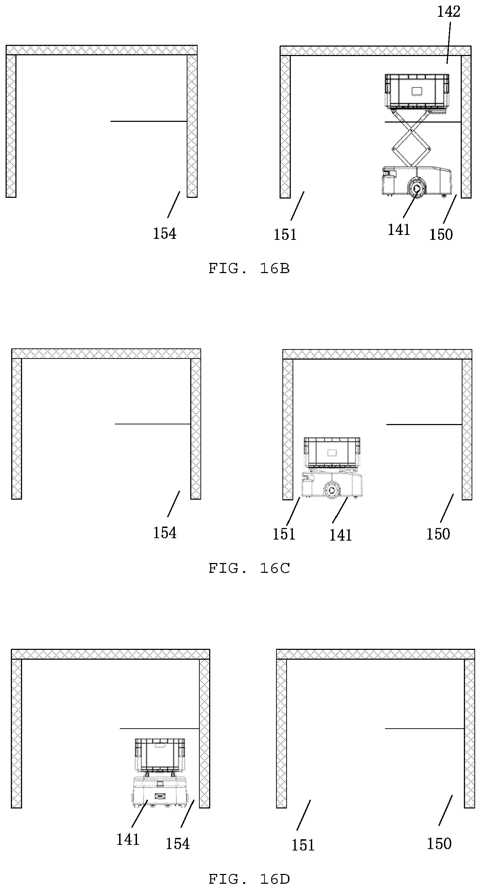

1) A conveyor 141 is controlled to move to a second target point 150 in a low profile passage under a target rack, as shown in FIG. 16A.
2) The conveyor 141 is controlled to obtain the second goods located at a second target temporary storage location 142 in a high lifting state, as shown in FIG. 16B.
3) The conveyor 141 is controlled to move to a temporary location 151 in a high profile passage under the target rack and to switch from a high lifting state to a low lifting state, as shown in FIG. 16C.
4) The conveyor 141 is controlled to traverse a fourth alley between the target rack and an adjacent fourth rack and to move to a temporary location 154 in a low profile passage under the fourth rack, wherein the high profile passage under the target rack is adjacent to the low profile passage under the fourth rack, as shown in FIG. 16D.

Next, the conveyor 141 is controlled to convey the second goods from the temporary location 154 to an outbound target location along an outbound path.

It should be noted that in FIG. 16C, the conveyor 141 can lift the first goods to the predetermined height at its current position, or lift the first goods to the predetermined height during movement.

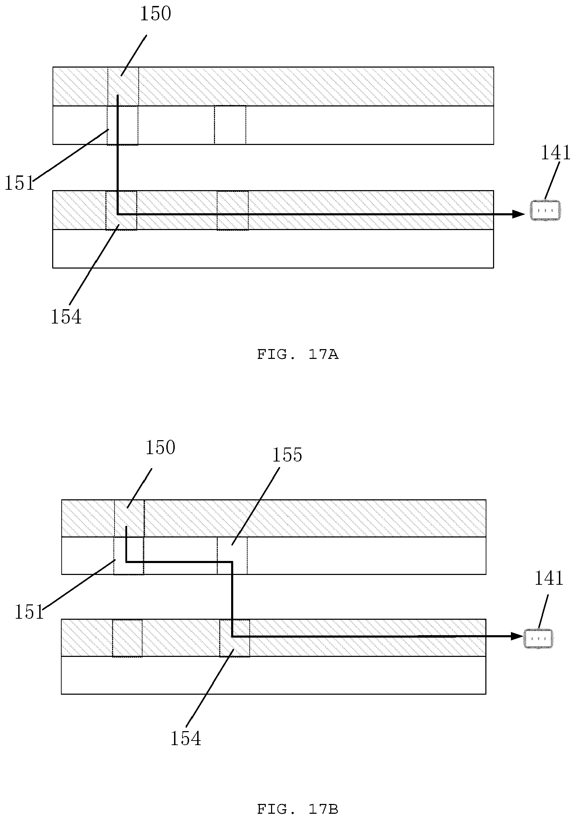

For example, as shown in FIG. 17A, the conveyor 141 is controlled to move from the second target point 150 to the temporary location 151 in the high profile passage under the target rack, to switch from a high lifting state to a low lifting state at the temporary location 151, and then to traverse the alley from the temporary location 151 to reach the temporary location 154 in the low profile passage under the adjacent rack. Then, the conveyor 141 is controlled to move from the temporary location 154 to the outbound target location.

For another example, as shown in FIG. 17B, the conveyor 141 is controlled to move from the second target point 150 to the temporary location 151 in the high profile passage under the target rack, and then to move from the temporary location 151 to the temporary location 155 along the high profile passage. During the movement of the conveyor 141 from the temporary location 151 to the temporary location 155, the conveyor 141 is controlled to switch from a high lifting state to a low lifting state. Next, the conveyor 141 is controlled to traverse the alley from the temporary location 155 and to reach the temporary location 154 in the low profile passage under the adjacent rack. Then, the conveyor 141 is controlled to move from the temporary location 154 to the outbound target location. Obviously, in this manner, the time for the conveyor 141 to switch from a high lifting state to a low lifting state under a static station can be effectively saved, thereby improving the operational efficiency of the conveyor.

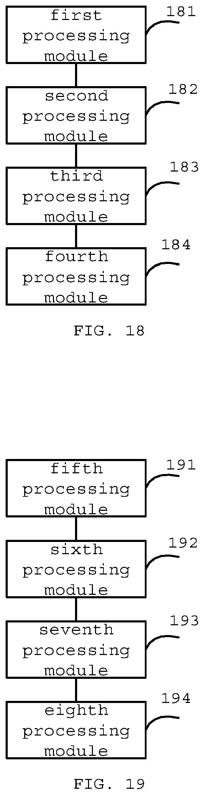

FIG. 18 is a structural diagram of an inbound control apparatus according to an embodiment of the present disclosure. As shown in FIG. 18, the inbound control apparatus comprises a first processing module 181, a second processing module 182, a third processing module 183, and a fourth processing module 184.

The first processing module 181 is configured to determine a first target temporary storage location under a target rack based on a first target storage location of the first goods on the target rack.

In some embodiments, the first target temporary storage location is formed by a temporary storage bracket, and the low profile passage is a passage under the temporary storage bracket.

The second processing module 182 is configured to determine an inbound path for a conveyor based on the first target temporary storage location and a current location of the conveyor.

In some embodiments, the inbound path is determined based on at least one of a low profile passage under the each rack of a plurality of racks in a rack area, a high profile passage under the each rack of a plurality of racks in a rack area, or alleys in the rack area. The low profile passage allows a conveyor to pass through with the first goods lifted to a low level, and the high profile passage allows a conveyor to pass through with the first goods lifted to a high level.

The third processing module 183 is configured to control the conveyor to convey the first goods to the first target temporary storage location along the inbound path.

In some embodiments, the third processing module 183 conveys the first goods to the first target temporary storage location according to a scheme involved in any embodiments shown in FIGS. 4 to 10.

The fourth processing module 184 is configured to control a storage and retrieval device to transport the first goods from the first target temporary storage location to the first target storage location.

FIG. 19 is a structural diagram of an outbound control apparatus according to an embodiment of the present disclosure. As shown in FIG. 19, the outbound control apparatus comprises a fifth processing module 191, a sixth processing module 192, a seventh processing module 193, and an eighth processing module 194.

The fifth processing module 191 is configured to determine a second target temporary storage location under a target rack based on a second target storage location of second goods on the target rack.

In some embodiments, the second target temporary storage location is formed by a temporary storage bracket, and the low profile passage is a passage under the temporary storage bracket.

The sixth processing module 192 is configured to control a storage and retrieval device to transport the second goods from the second target storage location to the second target temporary storage location.

In some embodiments, a storage and retrieval device transports the second goods from the second target storage location to the second target temporary storage location.

The seventh processing module 193 is configured to determine an outbound path for a conveyor based on the second target temporary storage location and an outbound target location.

In some embodiments, the outbound path is determined based on at least one of a low profile passage under the each rack of the plurality of the racks in the rack area, a high profile passage under the each rack of the plurality of the racks in the rack area, or alleys in the rack area, wherein the low profile passage allows the conveyor to pass through with the first goods lifted to a low level, and the high profile passage allows the conveyor to pass through with the first goods lifted to a high level.

The eighth processing module 194 is configured to control the conveyor to convey the second goods from the second target temporary storage location to the outbound target location along the outbound path.

In some embodiments, the eighth processing module 194 transports the second goods to the second target temporary storage location according to a scheme involved in any embodiments shown in FIGS. 12 to 17.

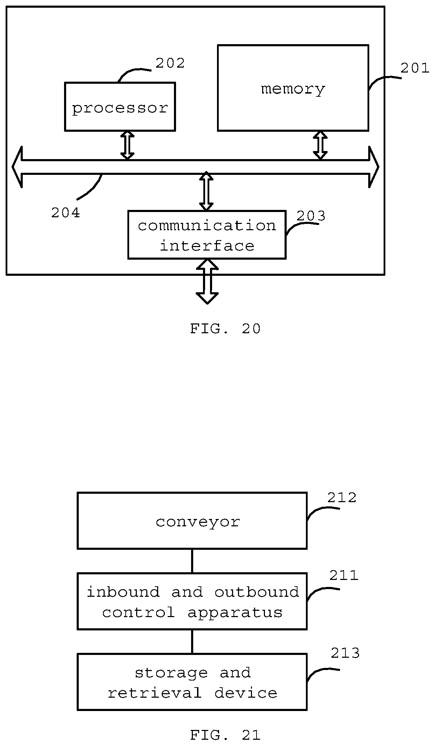

FIG. 20 is a structural diagram of an inbound and outbound control apparatus according to one embodiment of the present disclosure. As shown in FIG. 20, the inbound and outbound control apparatus comprises a memory 201 and a processor 202.

The memory 201 is used to store instructions. The processor 202 is coupled to the memory 201, and is configured to, based on instructions stored in the memory, carry out a method involved in any one of the embodiments shown in FIGS. 3 and 11.

As shown in FIG. 20, the inbound and outbound control apparatus further comprises a communication interface 203 for performing information interaction with other devices. In addition, the inbound and outbound control apparatus further comprises a bus 204. The processor 202, the communication interface 203, and the memory 201 perform communication with each other through the bus 204.

The memory 201 may include a high speed RAM memory, and may also include a non-volatile memory such as at least one disk storage device. The memory 201 may also be a memory array. The memory 201 may also be partitioned into blocks, which may be combined into virtual volumes according to a certain rule.

In addition, the processor 202 may be a central processing unit (CPU), or may be an Application Specific Integrated Circuit (ASIC) or one or more integrated circuits configured to implement the embodiments of the present disclosure.

The present disclosure further discloses a computer-readable storage medium on which computer instructions are stored, which when executed by a processor implement the method according to any one of the embodiments shown in FIGS. 3 and 11.

FIG. 21 is a structural diagram of an inbound and outbound system according to an embodiment of the present disclosure. As shown in FIG. 21, the inbound and outbound system comprises a plurality of racks each comprising at least one layer of storage spaces, with alleys formed by spaces between the plurality of racks. The inbound and outbound system further comprises an inbound and outbound control apparatus 211, a conveyor 212, and a storage and retrieval device 213 provided on the rack. The inbound and outbound control apparatus 211 may be an inbound and outbound control apparatus according to any one of the embodiments shown in FIG. 20.

The conveyor 212 is configured to convey the first goods to a first target temporary storage location or convey the second goods out of a warehouse from a second target temporary storage location based on the control of the inbound and outbound control apparatus 211.

The storage and retrieval device 213 is configured to transport the first goods from the first target temporary storage location to a first target storage location, or transport the second goods from the second target storage location to the second target temporary storage location.

It should be noted that, as shown in FIG. 2, a high profile passage and a low profile passage are provided under the rack, the high profile passage having a first height that is greater than a height of the conveyor in a high lifting state, and the low profile passage having a second height that is greater than a height of the conveyor in a low lifting state and less than the height of the conveyor in the high lifting state.

Moreover, the storage and retrieval device 213 is located above the alley, and a space under the storage and retrieval device has a third height, wherein the third height is greater than a height of the conveyor in an unloaded state and less than the height of the conveyor in the low lifting state.

According to the above embodiments of the present disclosure, the travel path of the conveyor can be reasonably planned by considering the alleys between the racks, the high profile passages under the racks and the low profile passages under the racks, to reduce the travel time of the conveyor and effectively improve the efficiency of the inbound and outbound operations.

In some embodiments, the above functional modules can be implemented as a general-purpose processor for performing the functions described in this disclosure, Programmable logic controller (PLC), digital signal processor (DSP), application specific integrated circuit (ASIC), field programmable gate array (FPGA) or other programmable logic devices, discrete gates or transistor logic devices, discrete hardware components or any appropriate combination thereof.

A person skilled in the art can understand that all or part of the steps for carrying out the method in the above embodiments can be completed by hardware or a program instructing the related hardware, wherein the program can be stored in a computer readable storage medium. The storage medium may be a read-only memory (ROM), a magnetic disk or a compact disk (CD).

The above description of this invention is given for illustration and description, but is not exhaustive and is not intended to limit the present invention to the form disclosed herein. Various modifications and variations are apparent for a person of ordinary skill in the art. Embodiments are selected and described for a better illustration of the principle and practical application of this invention, so that those skilled in the art can understand this invention and envisage various embodiments with various modifications suited to specific usages.

## Claims

1. An inbound control method, comprising:
determining a first target temporary storage location under a target rack based on a first target storage location of first goods on the target rack;
determining an inbound path for a conveyor based on the first target temporary storage location and a current location of the conveyor;
controlling the conveyor to convey the first goods to the first target temporary storage location along the inbound path; and
controlling a storage and retrieval device to transport the first goods from the first target temporary storage location to the first target storage location.

2. The inbound control method according to claim 1, wherein the determining the inbound path for the conveyor comprises:
determining the inbound path based on at least one of a low profile passage under an each rack of a plurality of racks in a rack area, a high profile passage under the each rack of the plurality of the racks in the rack area, or alleys in the rack area, wherein the low profile passage allows the conveyor to pass through with the first goods lifted to a low level, and the high profile passage allows the conveyor to pass through with the first goods lifted to a high level,
and, optionally, the first target temporary storage location is formed by a temporary storage bracket, and the low profile passage is a passage under the temporary storage bracket.

3. The inbound control method according to claim 2, wherein the controlling the conveyor to convey the first goods to the first target temporary storage location along the inbound path comprises:
controlling the conveyor to move from a low profile passage under the target rack to a first target point located below the first target temporary storage location along the inbound path;
controlling the conveyor to move from the first target point to a first temporary location in a high profile passage under the target rack;
controlling the conveyor to lift the first goods to a predetermined height; and
controlling the conveyor to return to the first target point to place the first goods on the first target temporary storage location.

4. The inbound control method according to claim 2, wherein the controlling the conveyor to convey the first goods to the first target temporary storage location along the inbound path comprises:
controlling the conveyor to move along the inbound path to a second temporary location in a low profile passage under a first rack adjacent to the target rack, wherein the low profile passage under the target rack is adjacent to a high profile passage under the first rack;
controlling the conveyor to move from the second temporary location to a third temporary location in the high profile passage under the first rack;
controlling the conveyor to lift the first goods to a predetermined height; and
controlling the conveyor to traverse a first alley between the target rack and the first rack, and move from the third temporary location to a first target point located below the first target temporary storage location, to place the first goods on the first target temporary storage location.

5. The inbound control method according to claim 2, wherein the controlling the conveyor to convey the first goods to the first target temporary storage location along the inbound path comprises:
controlling the conveyor to move along the inbound path to a fourth temporary location in a low profile passage under a second rack adjacent to the target rack, wherein a high profile passage under the target rack is adjacent to the low profile passage under the second rack;
controlling the conveyor to traverse from the fourth temporary location a second alley between the target rack and the second rack, and move to a fifth temporary location in a high profile passage under the target rack;
controlling the conveyor to lift the first goods to a predetermined height; and
controlling the conveyor to move to the first target point located below the first target temporary storage location to place the first goods on the first target temporary storage location.

6. The inbound control method according to claim 5, wherein the controlling the conveyor to lift the first goods to the predetermined height comprises:
controlling the conveyor to lift the first goods to the predetermined height at the fifth temporary location, wherein the fifth temporary location is adjacent to the first target point,
wherein the controlling the conveyor to move to the first target point comprises:
controlling the conveyor to move from the fifth temporary location to the first target point.

7. The inbound control method according to claim 5, wherein the controlling the conveyor to lift the first goods to the predetermined height comprises:
controlling the conveyor to move from the fifth temporary location to a sixth temporary location along the high profile passage under the target rack, and to lift the first goods to the predetermined height during the movement along the high profile passage under the target rack, wherein the fifth temporary location is not adjacent to the first target point, and the sixth temporary location is adjacent to the first target point,
wherein the controlling the conveyor to move to the first target point comprises:
controlling the conveyor to move from the sixth temporary location to the first target point.

8. The inbound control method according to any one of claims 1 to 7, wherein:
the conveyor enters a low profile passage of a designated rack along the inbound path from one end of the designated rack in the rack area, and continues to move along the inbound path to a first target point located below the first target temporary storage location; or
the conveyor enters the low profile passage of the designated rack from one side of the designated rack along the inbound path, and continues to move along the inbound path to the first target point.

9. An outbound control method, comprising:
determining a second target temporary storage location under a target rack based on a second target storage location of second goods on the target rack;
controlling a storage and retrieval device to transport the second goods from the second target storage location to the second target temporary storage location;
determining an outbound path for a conveyor based on the second target temporary storage location and an outbound target location; and
controlling the conveyor to convey the second goods from the second target temporary storage location to the outbound target location along the outbound path.

10. The outbound control method according to claim 9, wherein the determining the outbound path for the conveyor comprises:
determining the outbound path based on at least one of a low profile passage under an each rack of a plurality of racks in a rack area, a high profile passage under the each rack of the plurality of the racks in the rack area, or alleys in the rack area, wherein the low profile passage allows the conveyor to pass through with the first goods lifted to a low level, and the high profile passage allows the conveyor to pass through with the first goods lifted to a high level, and optionally, the second target temporary storage location is formed by a temporary storage bracket, and the low profile passage is a passage under the temporary storage bracket.

11. The outbound control method according to claim 10, wherein the controlling the conveyor to convey the second goods from the second target temporary storage location to the outbound target location along the outbound path comprises:
controlling the conveyor to obtain, at a second target point under the second target temporary storage location, the second goods located at the second target temporary storage location in a high lifting state;
controlling the conveyor to move to a seventh temporary location in a high profile passage under the target rack;
controlling the conveyor to switch from the high lifting state to a low lifting state at the seventh temporary location;
controlling the conveyor to return to the second target point from the seventh temporary location; and
controlling the conveyor to convey the second goods from the second target point to the outbound target location along the outbound path.

12. The outbound control method according to claim 10, wherein the controlling the conveyor to convey the second goods from the second target temporary storage location to the outbound target location along the outbound path comprises:
controlling the conveyor to obtain, at a second target point under the second target temporary storage location, the second goods located at the second target temporary storage location in a high lifting state;
controlling the conveyor to traverse a third alley between the target rack and an adjacent third rack at the second target point and to move to an eighth temporary location in a high profile passage under the third rack, wherein the low profile passage under the target rack is adjacent to the high profile passage under the third rack;
controlling the conveyor to switch from a high lifting state to a low lifting state at the eighth temporary location;
controlling the conveyor to move from the eighth temporary location to a ninth temporary location in a low profile passage under the third rack; and
controlling the conveyor to convey the second goods from the ninth temporary location to the outbound target location along the outbound path.

13. The outbound control method according to claim 10, wherein the controlling the conveyor to convey the second goods from the second target temporary storage location to the outbound target location along the outbound path comprises:
controlling the conveyor to obtain, at a second target point under the second target temporary storage location, the second goods located at the second target temporary storage location in a high lifting state;
controlling the conveyor to move to a seventh temporary location in a high profile passage under the target rack;
controlling the conveyor to switch from a high lifting state to a low lifting state;
controlling the conveyor to traverse a fourth alley between the target rack and an adjacent fourth rack and move to a tenth temporary location in a low profile passage under the fourth rack, wherein the high profile passage under the target rack is adjacent to the low profile passage under the fourth rack; and
controlling the conveyor to convey the second goods from the tenth temporary location to the outbound target location along the outbound path.

14. An inbound and outbound control apparatus, comprising:
a processor; and
a memory coupled to the processor, storing program instructions which, when executed by the processor, cause the processor to execute the method according to any one of claims 1 to 13.

15. An inbound and outbound system, comprising:
an inbound and outbound control apparatus according to claim 14;
a plurality of racks, wherein an each rack of the plurality of racks comprises at least one layer of storage spaces, with alleys formed by spaces between the plurality of racks;
a conveyor configured to convey a first goods to a first target temporary storage location or convey a second goods out of a warehouse from a second target temporary storage location based on the control of the inbound and outbound control apparatus; and
a storage and retrieval device provided on the rack configured to transport the first goods from the first target temporary storage location to a first target storage location, or transport the second goods from the second target storage location to the second target temporary storage location.

## Amended claims

### Amended claims in accordance with Rule 137(2) EPC.

1. An inbound control method, **characterized by** comprising:
determining a first target temporary storage location under a target rack based on a first target storage location of first goods on the target rack (301);
determining an inbound path for a conveyor based on the first target temporary storage location and a current location of the conveyor (302);
controlling the conveyor to convey the first goods to the first target temporary storage location along the inbound path (303), comprising:
controlling the conveyor to move along the inbound path to a fourth temporary location in a low profile passage under a second rack adjacent to the target rack, wherein a high profile passage under the target rack is adjacent to the low profile passage under the second rack;
controlling the conveyor to traverse from the fourth temporary location a second alley between the target rack and the second rack, and move to a fifth temporary location in a high profile passage under the target rack;
controlling the conveyor to move from the fifth temporary location to a sixth temporary location along the high profile passage under the target rack, and to lift the first goods to the predetermined height during the movement along the high profile passage under the target rack, wherein the fifth temporary location is not adjacent to the first target point located below the first target temporary storage location, and the sixth temporary location is adjacent to the first target point; and
controlling the conveyor to move from the sixth temporary location to the first target point to place the first goods on the first target temporary storage location; and
controlling a storage and retrieval device to transport the first goods from the first target temporary storage location to the first target storage location (304).

2. The inbound control method according to claim 1, wherein the determining the inbound path for the conveyor comprises:
determining the inbound path based on at least one of a low profile passage under an each rack of a plurality of racks in a rack area, a high profile passage under the each rack of the plurality of the racks in the rack area, or alleys in the rack area, wherein the low profile passage allows the conveyor to pass through with the first goods lifted to a low level, and the high profile passage allows the conveyor to pass through with the first goods lifted to a high level,
and, optionally, the first target temporary storage location is formed by a temporary storage bracket, and the low profile passage is a passage under the temporary storage bracket.

3. The inbound control method according to any one of claims 1 to 2, wherein:
the conveyor enters a low profile passage of a designated rack along the inbound path from one end of the designated rack in the rack area, and continues to move along the inbound path to a first target point located below the first target temporary storage location; or
the conveyor enters the low profile passage of the designated rack from one side of the designated rack along the inbound path, and continues to move along the inbound path to the first target point.

4. An outbound control method, **characterized by** comprising:
determining a second target temporary storage location under a target rack based on a second target storage location of second goods on the target rack (1101);
controlling a storage and retrieval device to transport the second goods from the second target storage location to the second target temporary storage location (1102);
determining an outbound path for a conveyor based on the second target temporary storage location and an outbound target location (1103); and
controlling the conveyor to convey the second goods from the second target temporary storage location to the outbound target location along the outbound path (1104), comprising:
controlling the conveyor to obtain, at a second target point under the second target temporary storage location, the second goods located at the second target temporary storage location in a high lifting state;
controlling the conveyor to move to a seventh temporary location in a high profile passage under the target rack;
controlling the conveyor to move from the seventh temporary location to a tenth temporary storage location along the high profile passage under the target rack, and controlling the conveyor to switch from a high lifting state to a low lifting state during the movement along the high profile passage under the target rack;
controlling the conveyor to traverse a fourth alley between the target rack and an adjacent fourth rack and move from the tenth temporary location to a eleventh temporary location located at a low profile passage under the fourth rack, wherein the high profile passage under the target rack is adjacent to the low profile passage under the fourth rack; and
controlling the conveyor to convey the second goods from the eleventh temporary location to the outbound target location along the outbound path.

5. The outbound control method according to claim 4, wherein the determining the outbound path for the conveyor comprises:
determining the outbound path based on at least one of a low profile passage under an each rack of a plurality of racks in a rack area, a high profile passage under the each rack of the plurality of the racks in the rack area, or alleys in the rack area, wherein the low profile passage allows the conveyor to pass through with the first goods lifted to a low level, and the high profile passage allows the conveyor to pass through with the first goods lifted to a high level, and optionally, the second target temporary storage location is formed by a temporary storage bracket, and the low profile passage is a passage under the temporary storage bracket.

6. An inbound and outbound control apparatus, **characterized by** comprising:
a processor (202); and
a memory (201) coupled to the processor (202), storing program instructions which, when executed by the processor, cause the processor (202) to execute the method according to any one of claims 1 to 5.

7. An inbound and outbound system, **characterized by** comprising:
an inbound and outbound control apparatus (211) according to claim 6;
a plurality of racks (5), wherein an each rack of the plurality of racks comprises at least one layer of storage spaces, with alleys (24) formed by spaces between the plurality of racks;
a conveyor (2, 212) configured to convey a first goods to a first target temporary storage location or convey a second goods out of a warehouse from a second target temporary storage location based on the control of the inbound and outbound control apparatus; and
a storage and retrieval device (6, 213) provided on the rack configured to transport the first goods from the first target temporary storage location to a first target storage location, or transport the second goods from the second target storage location to the second target temporary storage location.
